# EUROPÄISCHE PATENTSCHRIFT

(11) **EP 2 875 718 B1**
(45) Veröffentlichungstag und Bekanntmachung des Hinweises auf die Patenterteilung: **05.06.2019**
(21) Anmeldenummer: 13005473.7
(22) Anmeldetag: 22.11.2013
(51) Int. Cl.: A01G 20/47, A47L 5/14, A47L 5/24, A47L 9/32

(54) **Handgeführtes Arbeitsgerät mit einem Blasrohr**
Hand-held work device with a blowpipe
Appareil de travail manuel doté d'un tube de soufflage

(43) Veröffentlichungstag der Anmeldung: 27.05.2015
(73) Patentinhaber: Andreas Stihl AG & Co. KG, 71336 Waiblingen (DE)
(72) Erfinder: Gindele, Cornelius, 73207 Plochingen (DE); Rosskamp, Heiko, 73099 Adelberg (DE)
(74) Vertreter: Reinhardt, Annette

(56) Entgegenhaltungen:
- WO-A2-2009/144257
- WO-A2-2012/136906
- US-A- 4 734 017
- US-A- 4 945 604
- US-A- 6 105 206

## Beschreibung

Die Erfindung betrifft ein handgeführtes Arbeitsgerät mit einem Blasrohr der im Oberbegriff des Anspruchs 1 angegebenen Gattung.

Aus der US 6,105,206 ist ein handgeführtes, elektromotorisch angetriebenes Blasgerät bekannt, bei dem der Antriebsmotor und die Steuerung des Antriebsmotors in einem mittig im Blasluftstrom angeordneten Innenrohr angeordnet sind. Die Kühlluft zur Kühlung des Antriebsmotors strömt stromauf des Laufrads des Blasgeräts in den Ringraum, in dem der Arbeitsluftstrom strömt, aus. Bezogen auf die Strömungsrichtung im Blasrohr ist der Antriebsmotor stromauf des Leitrads des Gebläses des Blasgeräts angeordnet. Bei der in der US 6,105,206 gezeigten Anordnung ergibt sich eine sehr große Baulänge des Blasgeräts.

Die WO 2009/144257 A2 zeigt einen Laubsauger, bei dem der Antriebsmotor von einem Ringraum umgeben ist. Der Ringraum ist von einem Haltesteg durchgriffen, der einen Zuführkanal für Kühlluft ausbildet. Zur Förderung der Kühlluft wird ein Hilfslüfterrad benötigt, das an der stromauf liegenden Stirnseite des Gebläses des Laubsaugers angeordnet ist.

Der Erfindung liegt die Aufgabe zugrunde, ein handgeführtes Arbeitsgerät der gattungsgemäßen Art zu schaffen, das einfach aufgebaut ist und einen kompakten Aufbau ermöglicht.

Diese Aufgabe wird durch ein handgeführtes Arbeitsgerät mit einem Blasrohr mit den Merkmalen des Anspruchs 1 gelöst.

Es ist vorgesehen, dass die Entnahmeöffnung für Kühlluft für den Antriebsmotor stromab des Leitrads angeordnet ist. Der Motorraum, in dem der Antriebsmotor angeordnet ist, besitzt mindestens eine Ausströmöffnung für Kühlluft, die bezogen auf die Strömungsrichtung des Arbeitsluftstroms im Blasrohr stromauf der Entnahmeöffnung angeordnet ist. Die Entnahmeöffnung und die Ausströmöffnung sind dabei so angeordnet, dass im Betrieb
der Druck an der Entnahmeöffnung größer ist als der Druck an der Ausströmöffnung. Dadurch, dass die Entnahmeöffnung für Kühlluft stromab des Leitrads angeordnet ist, kann Kühlluft unter Überdruck aus dem Arbeitsluftstrom entnommen werden. Dieser Überdruck kann genutzt werden, um den Kühlluftstrom durch den Motorraum zu bewirken. Dadurch ist ein zusätzliches Lüfterrad zur Förderung der Kühlluft nicht zwingend notwendig. Dadurch wird ein einfacher, kompakter Aufbau ermöglicht. Der Antriebsmotor kann beispielsweise im Bereich des Laufrads oder des Leitrads angeordnet werden und muss nicht stromauf des Laufrads positioniert werden.

Vorteilhaft ist im Betrieb der Druck im Motorraum bezogen auf die Strömungsrichtung des Arbeitsluftstroms durch das Blasrohr stromab des Antriebsmotors größer als der Druck an der Ausströmöffnung, so dass die Kühlluft im Motorraum am Antriebsmotor in Gegenrichtung zum Arbeitsluftstrom strömt. Durch geeignete konstruktive Gestaltung kann das Druckgefälle durch den Motorraum so eingestellt werden, dass eine ausreichende Kühlung des Antriebsmotors im Betrieb sichergestellt ist. Die Druckverhältnisse sind aufgrund der geometrischen Abmessungen weitgehend vorgegeben, so dass eine entsprechende Abstimmung gut möglich ist. Vorteilhaft ist der Motorraum mit Ausnahme der Entnahmeöffnung und der Ausströmöffnung weitgehend geschlossen ausgebildet. Dadurch kann eine effektive Kühlung erreicht und sichergestellt werden. Die Ausströmöffnung mündet vorteilhaft in einen Bereich, in dem im Betrieb ein Druck herrscht, der höchstens so groß wie der Druck im Ringraum unmittelbar stromauf des Leitrads ist. Die Ausströmöffnung kann dabei stromauf des Leitrads in den Ringraum selbst münden. Dadurch ergibt sich ein einfacher Aufbau. Vorteilhaft ist zwischen Laufrad und Leitrad ein Spalt gebildet, der die Ausströmöffnung bildet. Eine Abdichtung zwischen Laufrad und Leitrad kann dadurch entfallen. Es ergibt sich ein einfacher Aufbau. Es kann jedoch auch vorteilhaft sein, dass die Ausströmöffnung in die Umgebung mündet. Auch eine Mündung der Ausströmöffnung stromauf des Laufrads in den Ringraum kann vorteilhaft sein.

Vorteilhaft ist stromab des Gebläses ein Austrittsleitelement angeordnet, dessen Außendurchmesser in Strömungsrichtung im Ringraum abnimmt. Aufgrund der Verkleinerung des Durchmessers des Austrittsleitelements vergrößert sich bei konstantem Durchmesser des Blasrohrs der freie Strömungsquerschnitt in Strömungsrichtung und der Druck nimmt zu. Die Entnahmeöffnung ist vorteilhaft an einer bezogen auf die Strömungsrichtung im Ringraum stromab liegenden Stirnseite des Austrittsleitelements angeordnet. In diesem Bereich stellt sich im Betrieb ein vergleichsweise hoher Druck ein, so dass allein aufgrund des Druckgefälles zwischen Entnahmeöffnung und Ausströmöffnung bereits ein ausreichender Kühlluftstrom für den Antriebsmotor erreicht werden kann. Die Anordnung an einer Stirnseite des Austrittsleitelements bewirkt eine starke Umlenkung der durch die Entnahmeöffnung in den Motorraum eintretenden Kühlluft. Dies führt dazu, dass größere Partikel aufgrund ihrer Trägheit nicht in die Entnahmeöffnung gelangen können. Dadurch wird eine Verschmutzung des Antriebsmotors vermieden. Die Entnahmeöffnung ist stromab des Laufrads angeordnet. Das Laufrad schleudert im Betrieb aufgrund seiner Rotation Schmutzpartikel bezogen auf die Drehachse des Laufrads nach außen. Dadurch ist die Luft im mittleren Bereich des Luftstroms vergleichsweise sauber und schmutzpartikelarm. Das Austrittsleitelement ist vorzugsweise mittig im Luftstrom angeordnet. Durch die Anordnung der Entnahmeöffnung an dem Austrittsleitelement wird die Luft aus dem Bereich des Luftstroms entnommen, der vergleichsweise saubere Luft führt.

Um den Strömungswiderstand beim Eintritt in die Entnahmeöffnung vergleichsweise gering zu halten, ist vorgesehen, dass das Austrittsleitelement benachbart zur Entnahmeöffnung in einer Schnittebene, die die Drehachse des Laufrads enthält, abgerundet ausgebildet ist.

Der Antriebsmotor ist an seinem Außenumfang vorteilhaft vollständig von einer zylindrischen Innenwand des Leitrads umgeben. Dadurch kann das Gebläse auch in einer schmutzbeladenen Umgebung wie beispielsweise bei einem Blasgerät oder einem Sauggerät eingesetzt werden. Dadurch, dass die Innenwand des Leitrads selbst als geschlossene Gehäusewand ausgebildet ist, die den Motorraum begrenzt, werden zusätzliche Bauteile zur Begrenzung des Motorraums in diesem Bereich vermieden. Vorteilhaft ist an dem Blasrohr eine Ausblasdüse festgelegt, durch die das Gebläse den Arbeitsluftstrom fordert. Zur Versorgung des Antriebsmotors mit elektrischer Energie und zur Ansteuerung besitzt der Antriebsmotor vorteilhaft mindestens ein Anschlusskabel. Vorteilhaft ist ein Kabelkanal vorgesehen, der den Motorraum mit einem außerhalb des Blasrohrs angeordneten Gehäuseinnenraum verbindet und durch den mindestens ein Anschlusskabel des Antriebsmotors ragt. Um einen weitgehend geschlossenen Motorraum zu erreichen und zu vermeiden, dass Kühlluft durch den Kabelkanal entweichen kann, ist vorgesehen, dass der freie Strömungsquerschnitt des Kabelkanals möglichst klein ist.

In besonders vorteilhafter Ausgestaltung ist vorgesehen, dass der Kabelkanal mindestens teilweise in einer Leitschaufel eines Leitrads verläuft. Durch den Kabelkanal wird die Luftströmung dadurch nicht oder nur geringfügig beeinträchtigt. Die Leitschaufel ist dabei vorteilhaft teilweise am Leitrad und teilweise am Austrittsleitelement ausgebildet. Der Kabelkanal ist vorteilhaft in seiner Längsrichtung geteilt ausgebildet. Dadurch wird die Herstellung des Kabelkanals, beispielsweise im Spritzguss, vereinfacht. Durch die Längsteilung des Kabelkanals ist auch die Montage der Anschlusskabel vereinfacht. Die Anschlusskabel können in eine der Teilschalen des Kabelkanals eingelegt werden und der Kabelkanal anschließend durch die andere Teilschale verschlossen werden. Dies ist insbesondere bei sehr kleinem freiem Strömungsquerschnitt des Kabelkanals vorteilhaft. Ein aufwendiges Durchfädeln der Anschlusskabel durch den Kabelkanal kann entfallen. Vorteilhaft beträgt der freie Strömungsquerschnitt des Kabelkanals weniger als etwa 10%, vorzugsweise weniger als etwa 5% des Strömungsquerschnitts der Entnahmeöffnung. Insbesondere umschließt der Kabelkanal das oder die Anschlusskabel des Antriebsmotors eng und ist näherungsweise dicht ausgebildet. Es kann auch vorteilhaft sein, den Kabelkanal abzudichten, so dass keine Kühlluft durch den Kabelkanal strömen kann.

Zur Steuerung des Antriebsmotors ist vorteilhaft eine in dem Gehäuseinnenraum des Arbeitsgeräts angeordnete Steuerung für den Antriebsmotor vorgesehen. Zur Kühlung der Steuerung kann ein separater Kühlluftstrom vorgesehen sein. Hierzu ist vorteilhaft vorgesehen, dass in den Gehäuseinnenraum eine erste Kühlluftöffnung führt, und dass der Gehäuseinnenraum über eine zweite Kühlluftöffnung mit einem Bereich stromauf des Gebläses verbunden ist. Die Steuerung ist vorteilhaft im Strömungsweg zwischen der ersten Kühlluftöffnung und der zweiten Kühlluftöffnung angeordnet. Dadurch wird eine aktive Kühlung der Steuerung aufgrund des stromauf des Gebläses im Blasrohr herrschenden Unterdrucks erreicht.

Ein einfacher Aufbau wird erreicht, wenn der Antriebsmotor ein Innenläufermotor ist. Der Motor kann dadurch auf einfache Weise gegenüber dem Gehäuse des Arbeitsgeräts fixiert werden, beispielsweise durch Fixierung in dem Leitrad. Vorteilhaft besitzt das Arbeitsgerät einen Handgriff, der zum Führen des Arbeitsluftstroms im Betrieb dient. Das Arbeitsgerät ist insbesondere ein Blasgerät oder ein Saug-/Blasgerät.

Ausführungsbeispiele der Erfindung werden im Folgenden anhand der Zeichnung erläutert. Es zeigen:
- Fig. 1: eine teilweise schematische Seitenansicht eines Blasgeräts,
- Fig. 2: einen Schnitt durch das Blasgerät aus Fig. 1,
- Fig. 3: der Bereich des Gebläses des Blasgeräts aus Fig. 1 in vergrößerter Darstellung,
- Fig. 4: eine schematische Darstellung des Druckverlaufs im Bereich des Gebläses des Blasgeräts im Betrieb,
- Fig. 5: eine ausschnittsweise Schnittdarstellung eines Ausführungsbeispiels des Blasgeräts aus Fig. 1,
- Fig. 6: eine teilgeschnittene, perspektivische Darstellung des Gebläses des Blasgeräts aus Fig. 1,
- Fig. 7: eine Explosionsdarstellung des Gebläses aus Fig. 6,
- Fig. 8: einen Schnitt durch den Kabelkanal des Gebläses aus Fig. 6,
- Fig. 9: eine teilgeschnittene, perspektivische Darstellung eines Ausführungsbeispiels des Gebläses,
- Fig. 10: eine perspektivische Darstellung eines Ausführungsbeispiels eines Laufrads,
- Fig. 11: eine perspektivische teilgeschnittene Darstellung eines Ausführungsbeispiels des Gebläses,
- Fig. 12 und Fig. 13: perspektivische Darstellungen von Ausführungsbeispielen des Laufrads des Gebläses aus Fig. 11,
- Fig. 14: eine perspektivische, teilgeschnittene Darstellung eines weiteren Ausführungsbeispiels des Gebläses,
- Fig. 15 und Fig. 16: schematische Darstellungen von Saug-/Blasgeräten,
- Fig. 17: eine Schnittdarstellung eines Ausführungsbeispiels eines Gebläses,
- Fig. 18: eine perspektivische Darstellung des Gebläses aus Fig. 17.

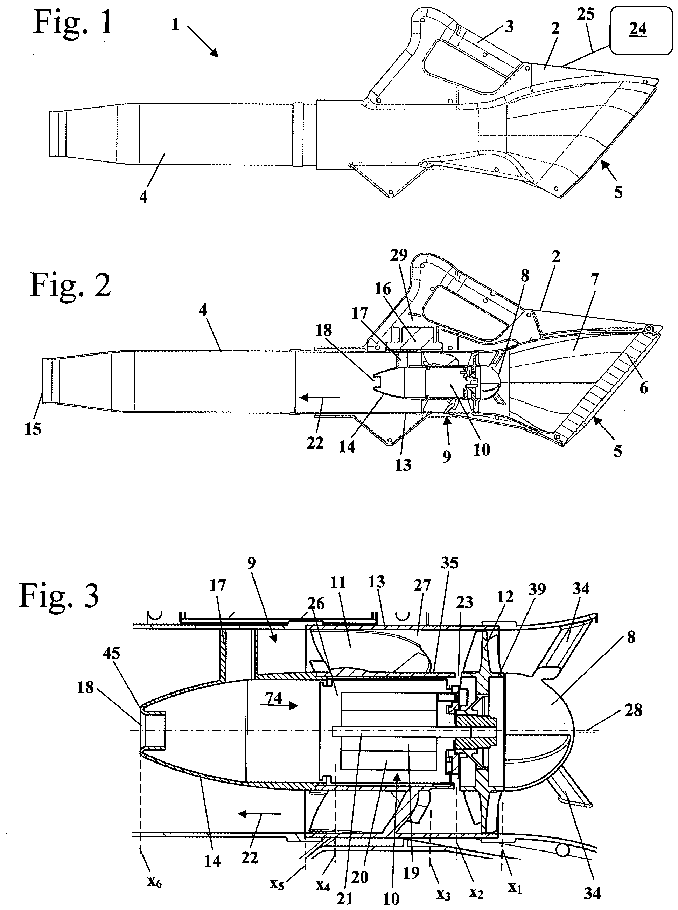

Fig. 1 zeigt als Ausführungsbeispiel für ein handgeführtes Arbeitsgerät mit einem Blasrohr ein Blasgerät 1. Das Blasgerät 1 besitzt ein Gehäuse 2, an dem ein Handgriff 3 zum Führen des Arbeitsluftstroms des Blasgeräts 1 im Betrieb und zum Tragen des Blasgeräts 1 festgelegt ist. Das Blasgerät 1 besitzt eine Ausblasdüse 4, durch die der Arbeitsluftstrom strömt. An dem Arbeitsgerät 1 können unterschiedliche Ausblasdüsen 4 festgelegt werden, um die Form des ausgeblasenen Luftstroms zu verändern. Zur Ansaugung von Arbeitsluft dient eine Ansaugöffnung 5. Das Blasgerät 1 besitzt einen in Fig. 1 nicht gezeigten Antriebsmotor, der über ein Anschlusskabel 25 mit einem in Fig. 1 schematisch gezeigten Akku 24 verbunden ist. Der Akku 24 kann vorteilhaft nach Art eines Rucksacks vom Bediener auf dem Rücken getragen werden. Auch eine Integration des Akkus 24 in das Gehäuse 2 des Blasgeräts 1 kann jedoch vorteilhaft sein. Vorteilhaft ist der Akku 24 über eine in Fig. 1 nicht gezeigte Steuerung mit dem Antriebsmotor verbunden.

Wie Fig. 2 zeigt, besitzt das Gehäuse 2 ein Blasrohr 13, in dem ein Gebläse 9 angeordnet ist. Das Gebläse 9 umfasst einen Antriebsmotor 10, der vom Akku 24 (Fig. 1) mit Energie versorgt wird. Der Antriebsmotor 10 ist über in Fig. 2 nicht gezeigte Anschlusskabel, die durch einen Kabelkanal 17 geführt sind, mit einer Steuerung 16 verbunden. Die Steuerung 16 ist in einem Gehäuseinnenraum 29 angeordnet, der außerhalb des Blasrohrs 13 ausgebildet ist. Im Betrieb fördert das Gebläse 9 Arbeitsluft in einer Strömungsrichtung 22 durch das Blasrohr 13 und die Ausblasdüse 4. Die Arbeitsluft verlässt das Blasgerät 1 an einer an der Ausblasdüse 4 ausgebildeten Ausblasöffnung 15. Die Arbeitsluft wird vom Gebläse 9 über eine Ansaugöffnung 5 in einen Ansaugkanal 7 und von dort in das Blasrohr 13 angesaugt. An der Ansaugöffnung 5 ist ein Ansauggitter 6 angeordnet, das größeren Verschmutzungen wie beispielsweise Blättern oder dergleichen zurückhält. Wie Fig. 2 auch zeigt, besitzt das Gebläse 9 ein näherungsweise halbkugelförmig ausgebildetes Eintrittsleitelement 8, das im Bereich des Eintritts ins Blasrohr 13 angeordnet ist. An der bezogen auf die Strömungsrichtung 22 stromab liegende Seite besitzt das Gebläse 9 ein Austrittsleitelement 14, das als Konus mit einer in Strömungsrichtung 22 gebogen, beispielsweise parabelförmig verlaufenden Außenfläche ausgebildet ist. Das Austrittsleitelement 14 kann auch eine andere Außenkontur besitzen. Vorzugsweise ist das Austrittsleitelement 14 kegelstumpfförmig mit in Strömungsrichtung gerade verlaufender Außenfläche ausgebildet. Das Austrittsleitelement 14 ist - bis auf den Kabelkanal 17 - rotationssymmetrisch ausgebildet. Der Außendurchmesser des Austrittsleitelements 14 verringert sich dabei in Strömungsrichtung 22. An der bezogen auf die Strömungsrichtung 22 stromab liegenden Stirnseite ist am Austrittsleitelement 14 eine Entnahmeöffnung 18 für Kühlluft für den Antriebsmotor 10 ausgebildet.

Fig. 3 zeigt den Aufbau des Gebläses 9 im Einzelnen. Wie Fig. 3 zeigt, besitzt das Eintrittsleitelement 8 Halterippen 34, mit denen das Leitelement 8 am Gehäuse 2 des Blasgeräts 1 gehalten ist. Im Ausführungsbeispiel sind insgesamt drei Halterippen 34 vorgesehen. Auch eine andere Anzahl der Halterippen 34 kann vorteilhaft sein. Das Eintrittsleitelement 8 ist ortsfest im Gehäuse 2 gehalten. Stromab des Eintrittsleitelements 8 ist ein Laufrad 12 angeordnet, das vom Antriebsmotor 10 um eine Drehachse 28 rotierend angetrieben ist. Der Antriebsmotor 10 ist im Ausführungsbeispiel als Elektromotor, und zwar als Innenläufermotor ausgebildet. Stromab des Laufrads 12 ist ein Leitrad 11 im Blasrohr 13 angeordnet. Das Laufrad 12 besitzt eine zylindrische Innenwand 39, deren Außendurchmesser dem Außendurchmesser des benachbarten Bereichs des Eintrittsleitelements 8 entspricht. Das stromab des Laufrads 12 angeordnete Leitrad 11 besitzt eine zylindrische Innenwand 35, deren Außendurchmesser dem Außendurchmesser der Innenwand 39 des Laufrads 12 entspricht. Die Innenwand 35 des Leitrads 11 begrenzt einen Motorraum 26, in dem der Antriebsmotor 10 angeordnet ist. Zwischen der Innenwand 35 und dem Blasrohr 13 ist ein Ringraum 27 gebildet, durch den der Arbeitsluftstrom in der Strömungsrichtung 22 strömt. In dem Ringraum 27 sind die Schaufeln des Laufrads 12 und die Leitschaufeln des Leitrads 11 angeordnet.

Der in Fig. 3 schematisch gezeigte Antriebsmotor 10 besitzt einen radial außen liegenden Stator 20, der fest am Leitrad 11 gehalten ist. Der Antriebsmotor 10 besitzt einen Rotor 19, der drehfest mit der Antriebswelle 21 verbunden ist und die Antriebswelle 21 um die Drehachse 28 rotierend antreibt. An der Antriebswelle 21 ist das Leitrad 12 festgelegt. Zwischen der Innenwand 35 des Leitrads und der Innenwand 39 des Laufrads 12 ist ein Ringspalt ausgebildet, der eine Ausströmöffnung 23 für Kühlluft bildet. Hierzu besitzen Laufrad 12 und Leitrad 11 im Ausführungsbeispiel in Richtung der Drehachse 28 einen Abstand zueinander.

Das Austrittsleitelement 14 ist stromab des Leitrads 11 angeordnet. Der Außendurchmesser des Austrittsleitelements 14 entspricht an der dem Leitrad 11 zugewandten, bezogen auf die Strömungsrichtung 22 stromauf liegenden Seite einen Außendurchmesser, der dem Außendurchmesser der Innenwand 35 entspricht. Der Kabelkanal 17 ist am Austrittsleitelement 14 ausgebildet und ebenfalls stromab des Leitrads 11 angeordnet. Der Kabelkanal 17 ist als separater, etwa radial zur Drehachse 28 des Laufrads 12 nach außen ragender Stutzen am Austrittsleitelement 14 ausgebildet. Wie Fig. 3 auch zeigt, ist das Austrittsleitelement 14 benachbart zur Entnahmeöffnung 18 in der in Fig. 3 gezeigten Schnittebene, die die Drehachse 28 enthält, mit einer Rundung 45 versehen. Vorteilhaft ist die Rundung 45 rotationssymmetrisch um die Drehachse 28 ausgebildet, so dass sich in jeder die Drehachse 28 enthaltenden Schnittebene eine Rundung 45 ergibt.

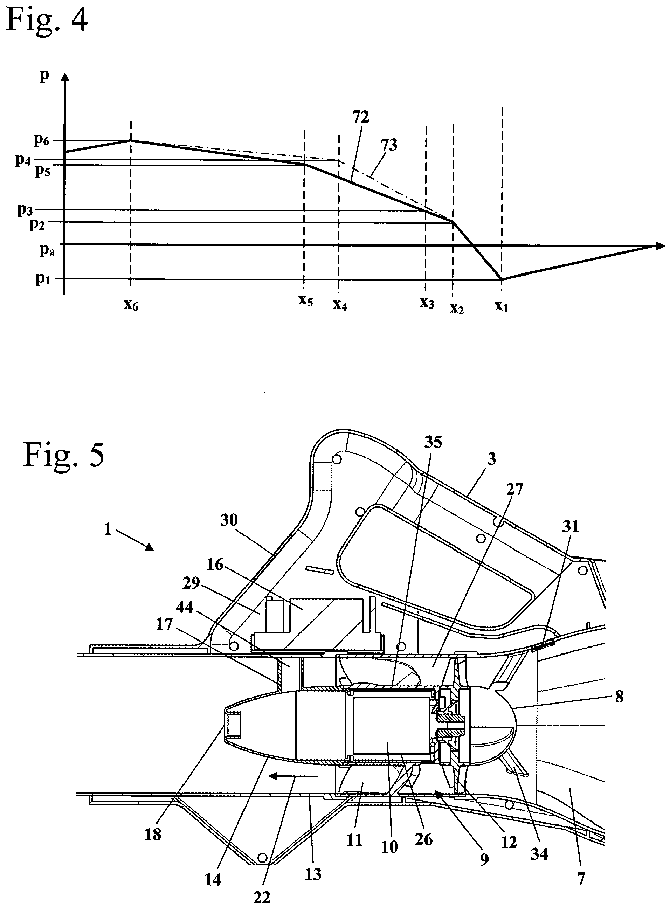

Fig. 4 zeigt den Druckverlauf im Blasrohr 13 im Betrieb des Blasgeräts 1 an den Stellen x₁ bis x₆. Der gezeigte Druckverlauf stellt sich dabei bei jeder Drehzahl in ähnlichem Verlauf ein, lediglich der absolute Druck ändert sich in Abhängigkeit der Drehzahl. Die durchgezogene Linie 72 zeigt den Druck im Ringraum 27 und die strichpunktiert gezeigte Linie 73 den Druck im Motorraum 26. Die Stellen x₁ bis x₆ sind dabei auch in Fig. 3 schematisch gezeigt. Wie die Fig. 3 und 4 zeigen, herrscht der niedrigste Druck p₁ an einer ersten Stelle x₁ unmittelbar stromauf des Laufrads 12. Der Druck x₁ ist niedriger als der Umgebungsdruck pₐ. Das Laufrad 12 erhöht den Druck des Arbeitsluftstroms. Unmittelbar stromab des Laufrads 12 im Bereich der Ausströmöffnung 23 herrscht an einer zweiten Stelle x₂ ein Druck p₂, der oberhalb des Umgebungsdrucks pₐ liegt. Unmittelbar stromauf des Leitrads 11 hat sich der Druck in Strömungsrichtung 22 gesehen weiter erhöht.

An einer dritten Stelle x₃ unmittelbar stromauf des Leitrads 11 herrscht im Betrieb ein Druck p₃, der höher als der Druck p₂ ist. Der Druck im Ringraum 26 erhöht sich im Bereich des Leitrads 11 weiter bis zu einem fünften Druck p₅, der an einer fünften Stelle x₅ unmittelbar stromab des Leitrads 11 gemessen ist. Auch am Außenumfang des Austrittsleitelements 14 erhöht sich der Druck in Strömungsrichtung 22 weiter, allerdings ist der Druckanstieg geringer als im Bereich des Laufrads 11. An einer sechsten Stelle x₆ an der Entnahmeöffnung 18 herrscht ein sechster Druck p₆. Stromab des Austrittsleitelements 14 nimmt der Druck dann wieder ab. Im Motorraum 26 herrscht bezogen auf die Strömungsrichtung 22 im Ringraum 27 unmittelbar stromab des Antriebsmotors 10 an einer vierten Stelle x₄ ein vierter Druck p₄, der im Ausführungsbeispiel etwas höher als der fünfte Druck p₅ an der fünften Stelle x₅ ist. Der vierte Druck p₄ kann jedoch auch niedriger als der fünfte Druck p₅ sein.

Dadurch, dass der sechste Druck p₆ an der Entnahmeöffnung 18 größer als der zweite Druck p₂ an der Ausströmöffnung 23 ist, strömt der Kühlluftstrom in einer Strömungsrichtung 74 durch den Motorraum 26, die der Strömungsrichtung 22 des Arbeitsluftstroms entgegengerichtet ist. Die Kühlluftströmung kann dabei allein aufgrund des Druckgefälles zwischen der Ausströmöffnung 23 und der Entnahmeöffnung 18 erfolgen. Der Motorraum 26 ist dabei gegenüber dem Ringraum 26 und gegenüber der Umgebung weitgehend abgedichtet. Der Strömungsquerschnitt des Kabelkanals 17 wird vorteilhaft möglichst klein gewählt, um sicherzustellen, dass höchstens sehr geringe Luftmengen durch den Kabelkanal 17 ausströmen können. Auch der vierte Druck p₄ im Motorraum 26 bezogen auf die Strömungsrichtung 22 stromab des Antriebsmotors 10 ist größer als der zweite Druck p₂ an der Ausströmöffnung 23, so dass unabhängig von einem geringfügigen Luftstrom durch den Kabelkanal 17 eine Kühlluftströmung am Antriebsmotor 10 in Strömungsrichtung 74 sichergestellt ist.

Fig. 5 zeigt ein Ausführungsbeispiel des Blasgeräts 1, bei dem der Gehäuseinnenraum 29, in dem die Steuerung 16 für den Antriebsmotor 10 angeordnet ist, über eine erste Kühlluftöffnung 30 mit der Umgebung und über eine zweite Kühlluftöffnung 31 mit dem Innenraum des Blasrohrs 13 stromauf des Laufrads 12 verbunden ist. Dadurch, dass der erste Druck p₁ im Blasrohr 13 stromauf des Laufrads 12 deutlich geringer ist als der Umgebungsdruck pₐ (siehe Fig. 4), wird auch über die Kühlluftöffnungen 30 und 31 Luft durch den Gehäuseinnenraum 29 in das Blasrohr 13 gesaugt. Die Steuerung 16 ist im Kühlluftstrom von der ersten Kühlluftöffnung 30 zur zweiten Kühlluftöffnung 31 angeordnet und wird dadurch aktiv gekühlt. Der Aufbau des in Fig. 5 ausschnittsweise gezeigten Blasgeräts 1 entspricht ansonsten dem in den vorangegangenen Figuren gezeigten und beschriebenen Aufbau, wobei gleiche Bezugszeichen einander entsprechende Elemente bezeichnen.

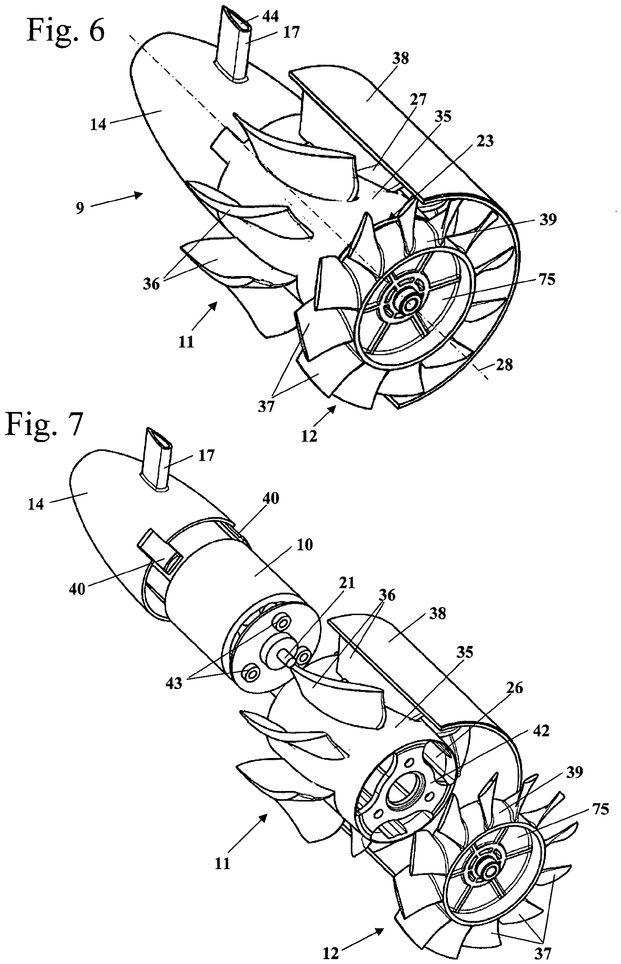

Fig. 6 und Fig. 7 zeigen die Gestaltung des Gebläses 9 im Einzelnen. Wie Fig. 6 zeigt, führt durch den Kabelkanal 17 eine Durchgangsöffnung 44, durch die in den Fig. 6 und 7 "nicht gezeigte Anschlusskabel geführt sind. Das Leitrad 11 besitzt eine Außenwand 38, die zylindrisch ausgebildet ist und konzentrisch zur Innenwand 35 und zur Drehachse 28 angeordnet ist. Das Leitrad 11 besitzt eine Vielzahl von Leitschaufeln 36, die die Innenwand 35 fest mit der Außenwand 38 verbinden und die im Ringraum 27 angeordnet sind. Die Außenwand 38 bildet einen Teil des Blasrohrs 13. Das Laufrad 12 besitzt eine Vielzahl von Schaufeln 37, die an der Innenwand 39 fixiert ist. Zwischen den Innenwänden 35 und 39 ist die Ausströmöffnung 23 als umlaufender Schlitz ausgebildet. Da keine Luft durch die Innenwand 39 des Laufrads 12 strömen muss, kann die Innenwand 39 durch eine Querwand 75, die sich im Ausführungsbeispiel senkrecht zur Drehachse 28 erstreckt, verschlossen sein.

Wie Fig. 7 zeigt, ist das Strömungsleitelement 14 mit Rastfingern 40 versehen, die an der Innenwand 35 des Leitrads 11 einrasten und das Austrittsleitelement 14 fest mit dem Leitrad 11 verbinden. Die Innenwand 35 begrenzt den Motorraum 26, in dem der Antriebsmotor 10 angeordnet ist. Der Antriebsmotor 10 ist im Ausführungsbeispiel über insgesamt drei Befestigungsschrauben 43 an einem Befestigungsflansch 42 fixiert, der fest mit dem Leitrad 11 verbunden ist. Der Befestigungsflansch 42 kann vorteilhaft einteilig mit dem Leitrad 11 ausgebildet sein.

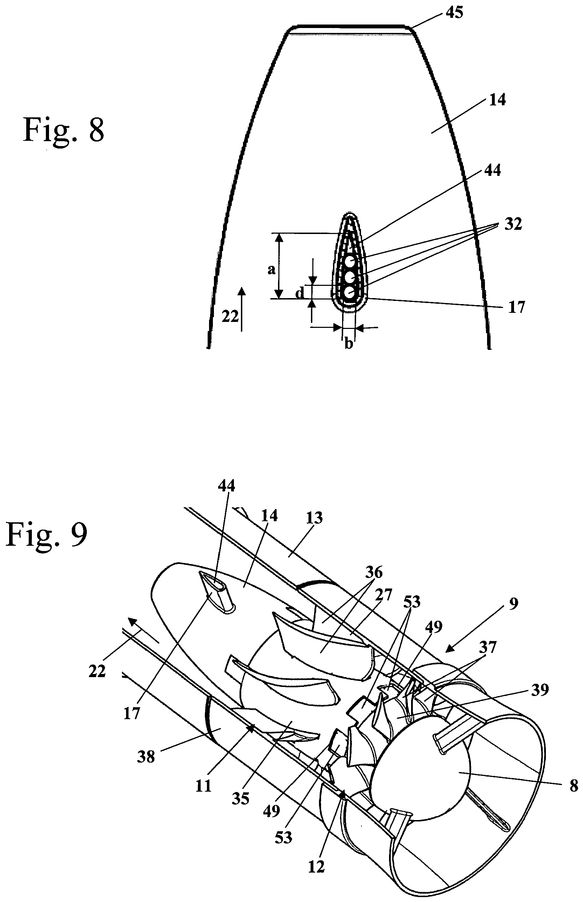

Fig. 8 zeigt die Gestaltung der Durchgangsöffnung 44 im Einzelnen. Im Ausführungsbeispiel sind drei Anschlusskabel 32 für den Antriebsmotor 10 vorgesehen, die den Antriebsmotor 10 mit der Steuerung 16 und/ oder mit dem Akku 24 verbinden. Die Anschlusskabel 32 besitzen im Ausführungsbeispiel einen Durchmesser d, der etwa der Breite b der Durchgangsöffnung 44 entspricht. Der Kabelkanal 17 ist strömungsgünstig ausgebildet und besitzt einen flügelförmigen Querschnitt. Die drei Anschlusskabel 32 sind in Strömungsrichtung 22 hintereinander angeordnet. Die Durchgangsöffnung 44 besitzt eine Länge a, die im Ausführungsbeispiel etwa dem vierfachen Durchmesser d eines Anschlusskabels 32 entspricht. Der zwischen den Anschlusskabeln 32 und der Wand des Kabelkanals 17 verbleibende freie Strömungsquerschnitt der Durchgangsöffnung 44 ist sehr klein. Vorteilhaft beträgt der freie Strömungsquerschnitt weniger als etwa 10%, insbesondere weniger als etwa 5% des Strömungsquerschnitts der Entnahmeöffnung 18 (Fig. 3). Besonders vorteilhaft ist der Kabelkanal 17 weitgehend, insbesondere vollständig abgedichtet.

Fig. 9 zeigt ein weiteres Ausführungsbeispiel eines Gebläses 9. Bei dem in Fig. 9 gezeigten Gebläse 9 sind am Leitrad 11 an der dem Laufrad 12 zugewandten Seite mehrere Aussparungen 49 gebildet, die Ausströmöffnungen 53 für die Kühlluft des Antriebsmotors 10 begrenzen. Die Ausströmöffnungen 53 münden dabei in Strömungsrichtung 22 zwischen dem Laufrad 12 und den Leitschaufeln 36 des Leitrads 11 in den Ringraum 27. Der weitere Aufbau des Gebläses 9 entspricht dem in Fig. 6 gezeigten Gebläse 9. Gleiche Bezugszeichen kennzeichnen dabei einander entsprechende Bauteile.

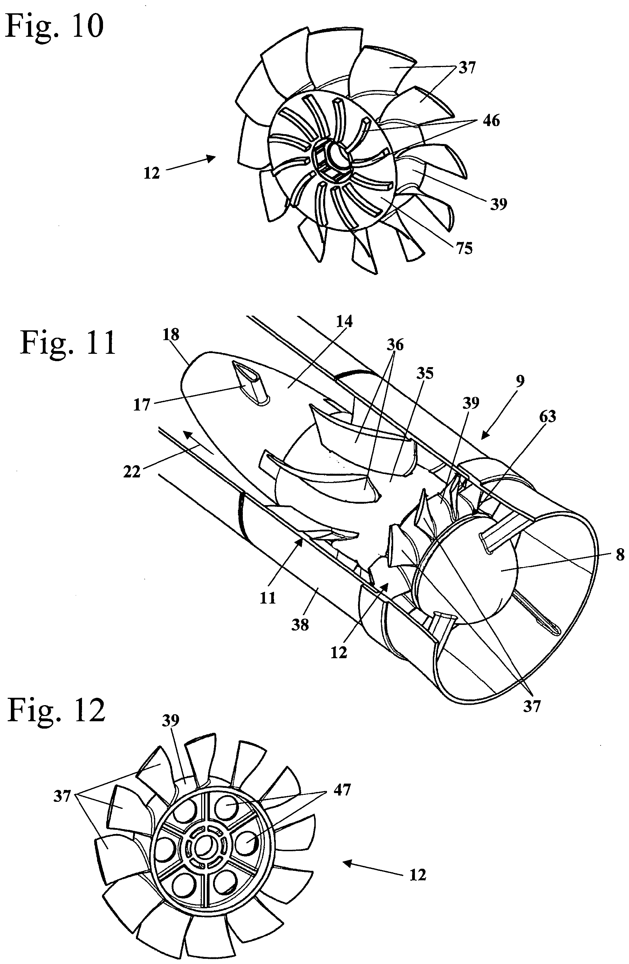

Fig. 10 zeigt eine Ausführungsvariante eines Laufrads 12, bei dem an der in Strömungsrichtung 22 stromab liegenden Seite der Zwischenwand 75 Zusatzlüfterflügel 46 angeordnet sind. Die Zusatzlüfterflügel 46 bilden ein Radialgebläse, das die Kühlluftströmung durch den Motorraum 26 unterstützt. Zusatzlüfterflügel 46 können insbesondere vorteilhaft sein, wenn die Entnahmeöffnung 23, 53 in Strömungsrichtung 22 zwischen dem Laufrad 12 und dem Leitrad 11 vorgesehen ist.

Bei dem in Fig. 11 gezeigten Ausführungsbeispiel eines Gebläses 11 ist eine Ausströmöffnung 63 bezogen auf die Strömungsrichtung 22 zwischen dem Eintrittsleitelement 8 und dem Leitrad 12, also stromauf des Leitrads 12, angeordnet. Die Gestaltung des Gebläses 9 entspricht ansonsten im Wesentlichen den zu den vorangegangenen Figuren beschriebenen Gestaltungen. In Fig. 12 ist das Leitrad 12 des Gebläses aus Fig. 11 perspektivisch dargestellt. Das Leitrad 12 besitzt eine Vielzahl von Durchtrittsöffnungen 47, die innerhalb der Innenwand 39 angeordnet sind und durch die die Kühlluft aus dem Motorinnenraum 26 innerhalb der Innenwand 39 auf die stromauf liegende Seite des Laufrads 12 strömen kann. Um sicherzustellen, dass die Luft durch die Ausströmöffnung 63 austritt, ist vorteilhaft eine Abdichtung zwischen den Innenwänden 35 und 39 von Leitrad 11 und Laufrad 12 vorgesehen. Dadurch ergibt sich ein erhöhter konstruktiver Aufwand. Das zwischen der Entnahmeöffnung 18 und der Ausströmöffnung 63 gegebene, für die Luftströmung nutzbare Druckgefälle ist jedoch, wie Fig. 4 zeigt, deutlich größer, so dass sich ein größerer Kühlluftstrom ergibt.

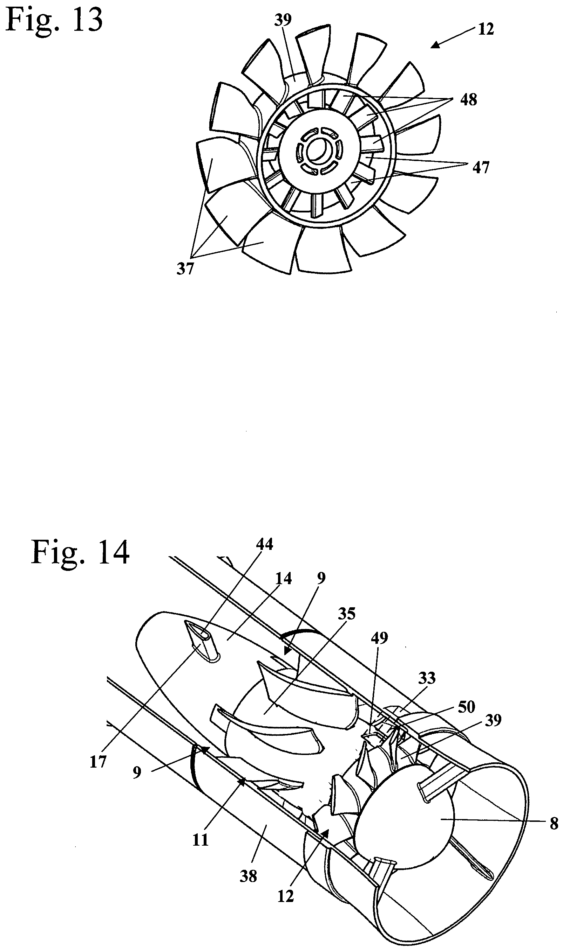

Fig. 13 zeigt ein Ausführungsbeispiel für ein Laufrad 12 für das in Fig. 11 gezeigte Gebläse 9. Die Durchtrittsöffnung 47 weist eine Vielzahl innerhalb der Innenwand 39 angeordneten Zusatzlüfterflügeln 48 auf, die ein Axialgebläse bilden und die die Kühlluftförderung zusätzlich unterstützen.

Fig. 14 zeigt ein Ausführungsbeispiel eines Gebläses 9, bei dem eine Aussparung 49 am Leitrad 11 über einen schematisch gezeigten Kanal 50 mit einer Ausströmöffnung 33 verbunden ist, die außerhalb des Blasrohrs 13 mündet. Die Ausströmöffnung 33 kann beispielsweise in den Gehäuseinnenraum 29 münden. Die Ausströmöffnung 33 kann jedoch auch außerhalb des Gehäuseinnenraums 29 in die Umgebung münden.

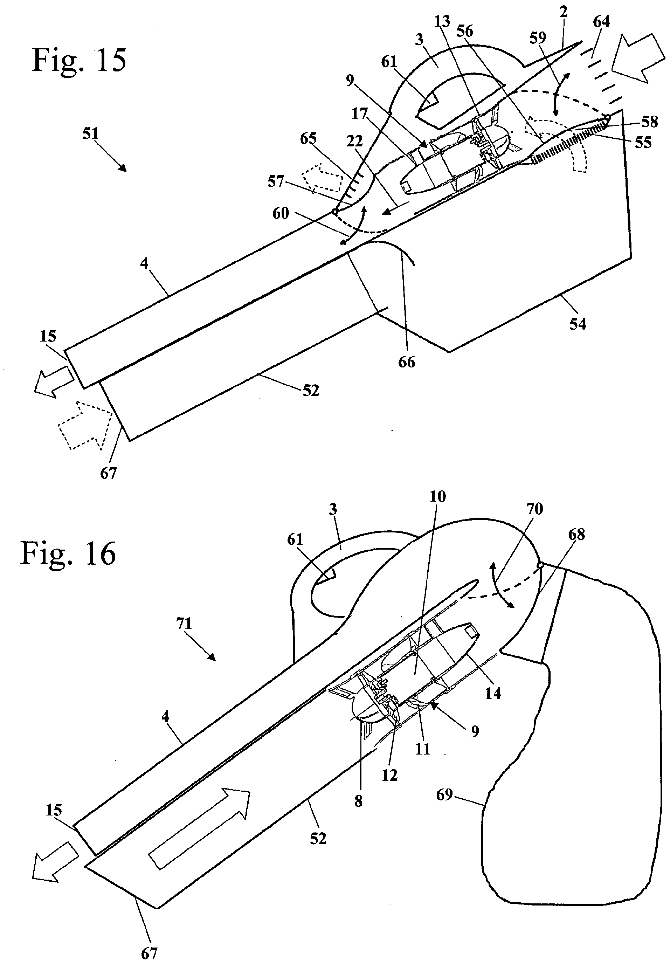

Fig. 15 zeigt als Ausführungsbeispiel für ein handgeführtes Arbeitsgerät mit einem Blasrohr 13 ein Saug-/Blasgeräts 51, das ein Gebläse 9 besitzt. Das Saug-/Blasgerät 51 besitzt ein Saugrohr 52, an dessen Stirnseite eine Ansaugöffnung 67 ausgebildet ist, durch die ein Saugluftstrom angesaugt wird. Das Saugrohr 52 mündet in einen Fangbehälter 54. An der Mündungsöffnung des Saugrohrs 52 in den Fangbehälter 54 ist im Ausführungsbeispiel ein Leitelement 66 angeordnet. Der Fangbehälter 54 ist über eine Öffnung 58 mit einem Blasrohr 13 verbunden. Die Öffnung 58 mündet dabei stromauf eines Gebläses 9 in das Blasrohr 13. Das Gebläse 9 entspricht einem der zu den vorangegangenen Figuren beschriebenen Gebläse 9. Stromab des Blasrohrs 13 ist eine Ausblasdüse 4 vorgesehen, durch die der Arbeitsluftstrom das Saug-/Blasgerät 51 durch eine Ausblasöffnung 15 verlassen kann.

Das in Fig. 15 gezeigte Saug-/Blasgerät 51 kann als Sauggerät oder als Blasgerät genutzt werden. Zur Umschaltung zwischen diesen Betriebszuständen sind zwei Klappen 56 und 57 vorgesehen. Fig. 15 zeigt mit durchgezogener Linie die Stellung der Klappen 56 und 57 beim Blasbetrieb. Stromauf des Gebläses 9 ist eine Nebenansaugöffnung 64 vorgesehen, über die das Blasrohr 13 in der gezeigten Stellung der ersten Klappe 56 mit der Umgebung verbunden ist. Das Gebläse 9 fordert den aus der Umgebung angesaugten Arbeitsluftstrom durch die Ausblasdüse 4, die bei der gezeigten Stellung der zweiten Klappe 57 mit dem Gebläse 9 verbunden ist. Zur Umschaltung in den Saugbetrieb werden die Klappen 56 und 57 in die gestrichelt gezeichneten Stellungen verschwenkt, und zwar entlang der Doppelpfeile 59 und 60. Dadurch ist das Gebläse 9 bezogen auf die Strömungsrichtung 22 durch das Gebläse 9 stromauf mit dem Fangbehälter 54 und dem daran angeordneten Saugrohr 52 verbunden. Das Gebläse 9 saugt den Arbeitsluftstrom durch das Saugrohr 52 und den Fangbehälter 54 an. Die Luft tritt aus dem Fangbehälter 54 über einen Filter 55 durch die Öffnung 58 in das Blasrohr 13 ein. Über den Filter 55 wird angesaugtes Gut wie Blätter oder dergleichen im Fangbehälter 54 abgeschieden. Durch die Klappe 57 ist die Ausblasdüse 4 verschlossen. Der vom Gebläse 9 geförderte Saugluftstrom verlässt das Gehäuse 2 des Saug-/Blasgeräts 51 durch einen Nebenaustrittsöffnung 65, die von der Klappe 57 freigegeben ist. Dadurch wird kein Blasluftstrom durch die Ausblasdüse 4 gefördert.

Fig. 16 zeigt ein weiteres Ausführungsbeispiel eines Saug-/Blasgeräts 71. Bei dem in Fig. 16 gezeigten Saug-/Blasgerät 51 ist zur Umschaltung zwischen Saugbetrieb und Blasbetrieb lediglich eine einzige Klappe 68 vorgesehen. Das Gebläse 9 ist im Saugrohr 52 angeordnet. Dadurch strömt angesaugtes Sauggut wie Blätter oder dergleichen am Gebläse 9 vorbei. Dadurch, dass der Motorraum 26 weitgehend abgeschlossen ausgebildet ist, ist der Antriebsmotor 10 dennoch vor Verschmutzung und Beschädigung geschützt. Die Klappe 68 kann in Richtung des Pfeils 70 verschwenkt werden. In der in Fig. 16 mit durchgezogener Linie gezeigten Stellung der Klappe 68 befindet sich das Saug-/Blasgerät 71 im Blasbetrieb. Das Gebläse 9 saugt durch die Ansaugöffnung 67 und das Saugrohr 52 Arbeitsluft mittels des Gebläses 9 an, die stromab des Gebläses 9 um näherungsweise 180° umgelenkt und durch die Ausblasdüse 4 gefördert wird. Der Arbeitsluftstrom verlässt das Saug-/Blasgerät 71 an der Ausblasöffnung 15. Im Saugbetrieb verschließt die Klappe 68 die Ausblasdüse 4. Der Arbeitsluftstrom wird durch das Saugrohr 52 angesaugt und am Gebläse 9 vorbei in einen von der Klappe 68 freigegebenen Fangsack 69 gefördert. Der Fangsack 69 ist luftdurchlässig, so dass angesaugte Verschmutzungen im Fangsack 69 zurückgehalten werden und der geförderte Arbeitsluftstrom den Fangsack 69 durch das Material des Fangsacks 69 in die Umgebung verlässt. Die in den Fig. 15 und 16 gezeigten Saug-/Blasgeräte 51 und 71 besitzen jeweils einen Bedienhebel 61 zur Ansteuerung des Antriebsmotors 10.

Ein entsprechender Bedienhebel ist auch beim Blasgerät 1 vorgesehen, in den Figuren jedoch nicht gezeigt.

In allen Ausführungsbeispielen ist der fünfte Druck p₅ an der Entnahmeöffnung 18 größer als der Druck p₂ oder pₐ an der Ausströmöffnung 23, 33, 53, 63. Die Förderung des Kühlluftstroms für den Antriebsmotor 10 erfolgt dadurch aufgrund des Druckgefälles. Die Förderung des Kühlluftstroms kann durch ein zusätzliches Gebläse unterstützt werden. Auch der vierte Druck p₄ im Motorraum ist größer als der zweite Druck p₂ an der Ausströmöffnung. Der Druck an der Ausströmöffnung 23, 33, 53, 63 ist dabei höchstens so groß wie der dritte Druck p₃ im Ringraum 27 unmittelbar stromauf des Leitrads 11. In allen Figuren bezeichnen gleiche Bezugszeichen einander entsprechende Elemente.

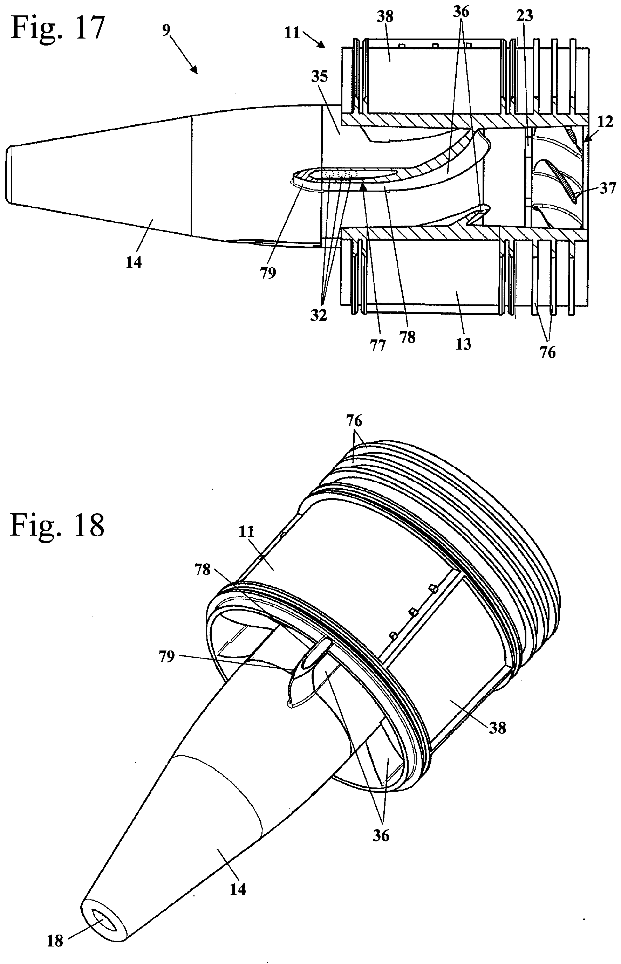

In den Figuren 17 und 18 ist ein weiteres Ausführungsbeispiel für ein Gebläse 9 gezeigt. Das Gebläse 9 besitzt ein Leitrad 11, dessen Außenwand 38 einen Abschnitt des Blasrohrs 13 bildet. Das Leitrad 11 besitzt eine Vielzahl von Leitschaufeln 36. Die Innenwand 35 des Leitrads 11 endet innerhalb der Außenwand 38. In diesem Bereich ist stromauf der Innenwand 35 ein Laufrad 12 angeordnet, das Schaufeln 37 besitzt. Zwischen dem Laufrad 12 und der Innenwand 35 des Leitrads 11 ist eine Ausströmöffnung 23 für Kühlluft gebildet. Die Kühlluft strömt an einer Entnahmeöffnung 18 in das Austrittsleitelement 14. Wie die Figuren 17 und 18 zeigen, ist an einer der Leitschaufeln 36 ein Kabelkanal 77 für Anschlusskabel 32 des Antriebsmotors 10 ausgebildet. Die Anschlusskabel 32 sind in Fig. 17 schematisch eingezeichnet. Auch eine andere Anzahl von Anschlusskabeln 32 kann zweckmäßig sein. Die Leitschaufel 36, in der der Kabelkanal 77 ausgebildet ist, besitzt eine erste Teilschale 78, die am Leitrad 11 angeformt ist. Eine zweite Teilschale 79 ist am Austrittsleitelement 14 angeformt. Die Teilungsebene zwischen den beiden Teilschalen 78 und 79 verläuft durch den Kabelkanal 77, so dass die Anschlusskabel 32 bei der Montage in die Teilschale 78 eingelegt werden können und anschließend das Austrittsleitelement 14 so am Leitrad 11 montiert werden kann, dass der Kabelkanal 77 geschlossen wird. Es kann auch vorgesehen sein, die erste Teilschale 78 oder die zweite Teilschale 79 als separates Bauteil auszubilden oder an einem anderen Bauteil anzuformen.

In dem in den Figuren 17 und 18 gezeigten Ausführungsbeispiel sind an der Außenseite der Außenwand 38 Rippen 76 ausgebildet die die Steifigkeit der Außenwand 38 erhöhen. Das Gebläse 9 ist im Bereich der Leitschaufeln 36 im Gehäuse 2 des Blasgeräts 1 gehalten. Im Bereich der Leitschaufeln 36 besitzt das Gebläse 9 eine hohe Stabilität und Robustheit. Es kann weitgehend vermieden werden, dass Belastungen und Stöße von außen die Außenwand des Leitrads 11 derart verformen, dass die Außenwand des Leitrads 11 mit dem Laufrad 12 in Kontakt kommt.

## Patentansprüche

1. Handgeführtes Arbeitsgerät mit einem Blasrohr (13), in dem ein Gebläse (9) angeordnet ist, wobei das Gebläse (9) einen Arbeitsluftstrom durch das Blasrohr (13) fördert, wobei das Gebläse (9) mindestens ein von einem Antriebsmotor (10) um eine Drehachse (28) rotierend angetriebenes Laufrad (12) und mindestens ein ortsfest in dem Blasrohr (13) des Arbeitsgeräts gehaltenes Leitrad (11) umfasst, wobei das Leitrad (11) bezogen auf die Strömungsrichtung (22) des Arbeitsluftstroms durch das Blasrohr (13) stromab des Laufrads (12) angeordnet ist, wobei der Antriebsmotor (10) ein Elektromotor ist, wobei der Antriebsmotor (10) in einem Motorraum (26) in dem Blasrohr (13) angeordnet ist und zwischen dem Blasrohr (13) und dem Motorraum (26) ein Ringraum (27) gebildet ist, durch den der Arbeitsluftstrom strömt, wobei das Arbeitsgerät stromab des Leitrads (11) eine Entnahmeöffnung (18) für Kühlluft für den Antriebsmotor (10) besitzt, und wobei der Motorraum (26) mindestens eine Ausströmöffnung (23, 33, 53, 63) für Kühlluft aufweist, die bezogen auf die Strömungsrichtung (22) des Arbeitsluftstroms im Blasrohr (13) stromauf der Entnahmeöffnung (18) angeordnet ist, **dadurch gekennzeichnet, dass** der Ringraum (27) über die Entnahmeöffnung (18) mit dem Motorraum (26) verbunden ist und dass die Entnahmeöffnung (18) und die Ausströmöffnung (23, 33, 53, 63) so angeordnet sind, dass im Betrieb der Druck (p₅) an der Entnahmeöffnung (18) größer als der Druck (p₂, pₐ) an der Ausströmöffnung (23, 33, 53, 63) ist.

2. Arbeitsgerät nach Anspruch 1,
**dadurch gekennzeichnet, dass** im Betrieb der Druck (p₄) im Motorraum (26) bezogen auf die Strömungsrichtung (22) des Arbeitsluftstroms durch das Blasrohr (13) stromab des Antriebsmotors (10) größer als der Druck (p₂, pₐ) an der Ausströmöffnung (23, 33, 53, 63) ist, so dass die Kühlluft im Motorraum (26) am Antriebsmotor (10) in Gegenrichtung zum Arbeitsluftstrom strömt.

3. Arbeitsgerät nach Anspruch 1 oder 2,
**dadurch gekennzeichnet, dass** der Motorraum (26) mit Ausnahme der Entnahmeöffnung (18) und der Ausströmöffnung (23, 33, 53, 63) weitgehend geschlossen ausgebildet ist.

4. Arbeitsgerät nach einem der Ansprüche 1 bis 3,
**dadurch gekennzeichnet, dass** die Ausströmöffnung (23, 33, 53, 63) in einen Bereich mündet, in dem im Betrieb ein Druck (p₂, pₐ) herrscht, der höchstens so groß wie der Druck (p₃) im Ringraum (27) unmittelbar stromauf des Leitrads (11) ist.

5. Arbeitsgerät nach Anspruch 4,
**dadurch gekennzeichnet, dass** die Ausströmöffnung (23, 53, 63) stromauf des Leitrads (11) in den Ringraum (27) mündet.

6. Arbeitsgerät nach Anspruch 5,
**dadurch gekennzeichnet, dass** zwischen Laufrad (12) und Leitrad (11) ein Spalt gebildet ist, der die Ausströmöffnung (23) bildet.

7. Arbeitsgerät nach Anspruch 4,
**dadurch gekennzeichnet, dass** die Ausströmöffnung (33) in die Umgebung mündet.

8. Arbeitsgerät nach einem der Ansprüche 1 bis 7,
**dadurch gekennzeichnet, dass** stromab des Gebläses (9) ein Austrittsleitelement (14) angeordnet ist, dessen Außendurchmesser in Strömungsrichtung (22) im Ringraum (27) abnimmt.

9. Arbeitsgerät nach Anspruch 8,
**dadurch gekennzeichnet, dass** die Entnahmeöffnung (18) an einer bezogen auf die Strömungsrichtung (22) im Ringraum (27) stromab liegenden Stirnseite des Austrittsleitelement (14) angeordnet ist.

10. Arbeitsgerät nach Anspruch 8 oder 9,
**dadurch gekennzeichnet, dass** das Austrittsleitelement (14) benachbart zur Entnahmeöffnung (18) in einer Schnittebene, die die Drehachse (28) des Laufrads (12) enthält, abgerundet ausgebildet ist.

11. Arbeitsgerät nach einem der Ansprüche 1 bis 10,
**dadurch gekennzeichnet, dass** der Antriebsmotor (10) an seinem Außenumfang vollständig von einer zylindrischen Innenwand (35) des Leitrads (11) umgeben ist.

12. Arbeitsgerät nach einem der Ansprüche 1 bis 11,
**dadurch gekennzeichnet, dass** an dem Blasrohr (13) eine Ausblasdüse (4) festgelegt ist, durch die das Gebläse (9) den Arbeitsluftstrom fördert.

13. Arbeitsgerät nach einem der Ansprüche 1 bis 12,
**dadurch gekennzeichnet, dass** das Arbeitsgerät einen Kabelkanal (17) besitzt, der den Motorraum (26) mit einem außerhalb des Blasrohrs (13) angeordneten Gehäuseinnenraum (29) verbindet und durch den mindestens ein Anschlusskabel (32) des Antriebsmotors (10) ragt.

14. Arbeitsgerät nach Anspruch 13,
**dadurch gekennzeichnet, dass** der freie Strömungsquerschnitt des Kabelkanals (17) weniger als etwa 10% des Strömungsquerschnitts der Entnahmeöffnung (18) beträgt.

15. Arbeitsgerät nach Ansprüche 13 oder 14,
**dadurch gekennzeichnet, dass** das Arbeitsgerät eine in dem Gehäuseinnenraum (26) des Arbeitsgeräts angeordnete Steuerung (16) für den Antriebsmotor (10) besitzt.

16. Arbeitsgerät nach Anspruch 15,
**dadurch gekennzeichnet, dass** in den Gehäuseinnenraum (26) eine erste Kühlluftöffnung (30) führt, dass der Gehäuseinnenraum (26) über eine zweite Kühlluftöffnung (31) mit einem Bereich stromauf des Gebläses (9) verbunden ist, und dass die Steuerung (16) im Strömungsweg zwischen der ersten Kühlluftöffnung (30) und der zweiten Kühlluftöffnung (31) angeordnet ist.

17. Arbeitsgerät nach einem der Ansprüche 1 bis 16,
**dadurch gekennzeichnet, dass** der Antriebsmotor (10) ein Innenläufermotor ist.

18. Arbeitsgerät nach einem der Ansprüche 1 bis 17,
**dadurch gekennzeichnet, dass** das Arbeitsgerät einen Handgriff (3) besitzt, der zum Führen des Arbeitsluftstroms im Betrieb dient.

19. Arbeitsgerät nach einem der Ansprüche 1 bis 18,
**dadurch gekennzeichnet, dass** das Arbeitsgerät ein Blasgerät (1) oder ein Saug-/Blasgerät (51, 67) ist.

## Claims

1. Hand-guided working implement with a blowpipe (13), in which a fan (9) is located, wherein the fan (9) delivers a working airflow through the blowpipe (13), wherein the fan (9) comprises at least one impeller (12) driven to rotate about an axis of rotation (28) by a drive motor (10) and at least one diffuser (11) held stationary in the blowpipe (13) of the working implement, wherein the diffuser (11) is located downstream of the impeller (12) relative to the direction of flow (22) of the working airflow through the blowpipe (13), wherein the drive motor (10) is an electric motor, wherein the drive motor (10) is located in a motor compartment (26) in the blowpipe (13) and an annular space (27) through which the working airflow flows is formed between the blowpipe (13) and the motor compartment (26), wherein the working implement has a take-off opening (18) for cooling air for the drive motor (10) downstream of the diffuser (11), and wherein the motor compartment (26) has at least one discharge opening (23, 33, 53, 63) for cooling air, which is located upstream of the take-off opening (18) relative to the direction of flow (22) of the working airflow through the blowpipe (13), **characterised in that** the annular space (27) is connected to the motor compartment (26) via the take-off opening (18), and **in that** the take-off opening (18) and the discharge opening (23, 33, 53, 63) are arranged such that in operation the pressure (p₅) at the take-off opening (18) is higher than the pressure (p₂, pₐ) at the discharge opening (23, 33, 53, 63).

2. Working implement according to claim 1,
**characterised in that** in operation the pressure (p₄) in the motor compartment (26) is higher downstream of the drive motor (10) relative to the direction of flow (22) of the working airflow through the blowpipe (13) than the pressure (p₂, pₐ) at the discharge opening (23, 33, 53, 63), so that the cooling air in the motor compartment (26) flows against the direction of the working airflow at the drive motor (10).

3. Working implement according to claim 1 or 2,
**characterised in that** the motor compartment (26) is largely closed with the exception of the take-off opening (18) and the discharge opening (23, 33, 53, 63).

4. Working implement according to any of claims 1 to 3,
**characterised in that** the discharge opening (23, 33, 53, 63) terminates into a region were there is a pressure (p₂, pₐ) in operation which is no higher than the pressure (p₃) in the annular space (27) immediately upstream of the diffuser (11).

5. Working implement according to claim 4,
**characterised in that** the discharge opening (23, 53, 63) terminates into the annular space (27) upstream of the diffuser (11).

6. Working implement according to claim 5,
**characterised in that** a gap representing the discharge opening (23) is formed between the impeller (12) and the diffuser (11).

7. Working implement according to claim 4,
**characterised in that** the discharge opening (33) terminates into the environment.

8. Working implement according to any of claims 1 to 7,
**characterised in that** downstream of the fan (9) there is provided an exit guide element (14), the outer diameter of which is reduced in the direction of flow (22) in the annular space (27).

9. Working implement according to claim 8,
**characterised in that** the take-off opening (18) is located at an end face of the exit guide element (14) which is downstream relative to the direction of flow (22) in the annular space (27).

10. Working implement according to claim 8 or 9,
**characterised in that** the exit guide element (14) is designed to be rounded adjacent to the take-off opening (18) in a sectional plane containing the axis of rotation (22) of the impeller (12).

11. Working implement according to any of claims 1 to 10,
**characterised in that** the drive motor (10) is completely surrounded by a cylindrical inner wall of the diffuser (11) at its outer circumference.

12. Working implement according to any of claims 1 to 11,
**characterised in that** a blow-out nozzle (4), through which the fan (9) delivers the working airflow, is fixed to the blowpipe (13).

13. Working implement according to any of claims 1 to 12,
**characterised in that** the working implement has a cable conduit (17), which connects the motor compartment (26) to a housing interior (29) outside the blowpipe (13) and through which at least one connecting cable (32) of the drive motor (10) extends.

14. Working implement according to claim 13,
**characterised in that** the free flow cross-section of the cable conduit (17) is less than approximately 10% of the flow cross-section of the take-off opening (18).

15. Working implement according to claim 13 or 14,
**characterised in that** the working implement has in its housing interior (26) a control unit (16) for the drive motor (10).

16. Working implement according to claim 15,
**characterised in that** a first cooling air opening (30) leads into the housing interior (26), **in that** the housing interior (26) is connected to a region upstream of the fan (9) via a second cooling air opening (31), and **in that** the control unit (16) is located in the flow path between the first cooling air opening (30) and the second cooling air opening (31).

17. Working implement according to any of claims 1 to 16,
**characterised in that** the drive motor (10) is an internal rotor motor.

18. Working implement according to any of claims 1 to 17,
**characterised in that** the working implement has a handle (3) used for guiding the working airflow in operation.

19. Working implement according to any of claims 1 to 18,
**characterised in that** the working implement is a blower (1) and/or a suction device/blower (51, 67).

## Revendications

1. Appareil de travail à main, comprenant un tube de soufflage (13) dans lequel est disposée un souffleur (9), dans lequel le souffleur (9) refoule un écoulement d'air de travail à travers le tube de soufflage (13), dans lequel le souffleur (9) comprend au moins un rotor (12) entraîné en rotation autour d'un axe de rotation (28) par un moteur d'entraînement (10), et au moins un stator (11) maintenu stationnaire dans le tube de soufflage (13) de l'appareil de travail, dans lequel le stator (11) est disposé en aval du rotor (12) par rapport à la direction d'écoulement (22) de l'écoulement d'air de travail à travers le tube de soufflage (13), dans lequel le moteur d'entraînement (10) est un moteur électrique, dans lequel le moteur d'entraînement (10) est disposé dans un compartiment pour moteur (26) dans le tube de soufflage (13), et entre le tube de soufflage (13) et le compartiment pour moteur (26) est formé un espace annulaire (27) que traverse l'écoulement d'air de travail, dans lequel l'appareil de travail comporte, en aval du stator (11), une ouverture de prélèvement (18) pour de l'air de refroidissement pour le moteur d'entraînement (10), et dans lequel le compartiment pour moteur (26) comporte au moins une ouverture d'écoulement sortant (23, 33, 53, 63) pour l'air de refroidissement, qui est disposée en amont de l'ouverture de prélèvement (18) par rapport à la direction d'écoulement (22) de l'écoulement d'air de travail dans le tube de soufflage (13),
**caractérisé en ce que** l'espace annulaire (27) est relié au compartiment pour moteur (26) par l'ouverture de prélèvement (18), et **en ce que** l'ouverture de prélèvement (18) et l'ouverture d'écoulement sortant (23, 33, 53, 63) sont disposées de telle sorte qu'en fonctionnement, la pression (p₅) en l'ouverture de prélèvement (18) soit supérieure à la pression (p₂, pₐ) en l'ouverture d'écoulement sortant (23, 33, 53, 63).

2. Appareil de travail selon la revendication 1,
**caractérisé en ce que**, en fonctionnement, la pression (p₄) dans le compartiment pour moteur (26) est supérieure en aval du moteur d'entraînement (10) par rapport à la direction d'écoulement (22) de l'écoulement d'air de travail à travers le tube de soufflage (13) à la pression (p₂, pₐ) sur l'ouverture d'écoulement sortant (23, 33, 53, 63), de sorte que l'air de refroidissement dans le compartiment pour moteur (26) s'écoule sur le moteur d'entraînement (10) en sens inverse par rapport à l'écoulement d'air de travail.

3. Appareil de travail selon la revendication 1 ou 2,
**caractérisé en ce que** le compartiment pour moteur (26) est en grande partie fermé, à l'exception de l'ouverture de prélèvement (18) et de l'ouverture d'écoulement sortant (23, 33, 53, 63).

4. Appareil de travail selon l'une des revendications 1 à 3,
**caractérisé en ce que** l'ouverture d'écoulement sortant (23, 33, 53, 63) débouche dans une zone où il règne en fonctionnement une pression (p₂, pₐ) qui est au maximum égale à la pression (p₃) dans l'espace annulaire (27) directement en amont du stator (11).

5. Appareil de travail selon la revendication 4,
**caractérisé en ce que** l'ouverture d'écoulement sortant (23, 53, 63) débouche dans l'espace annulaire (27) en amont du stator (11).

6. Appareil de travail selon la revendication 5,
**caractérisé en ce qu'**entre le rotor (12) et le stator (11) est formé une fente qui forme l'ouverture d'écoulement sortant (23).

7. Appareil de travail selon la revendication 4,
**caractérisé en ce que** l'ouverture d'écoulement sortant (33) débouche dans l'environnement.

8. Appareil de travail selon l'une des revendications 1 à 7,
**caractérisé en ce qu'**en aval du souffleur (9) est disposé un élément de guidage de sortie (14) dont le diamètre extérieur diminue dans le sens d'écoulement (22) dans l'espace annulaire (27).

9. Appareil de travail selon la revendication 8,
**caractérisé en ce que** l'ouverture de prélèvement (18) est disposée sur un côté frontal situé en aval par rapport à la direction d'écoulement (22) dans l'espace annulaire (27) de l'élément de guidage de sortie (14).

10. Appareil de travail selon la revendication 8 ou 9,
**caractérisé en ce que** l'élément de guidage de sortie (14), près de l'ouverture de prélèvement (18), a une forme arrondie dans un plan de coupe qui contient l'axe de rotation (28) du rotor (12).

11. Appareil de travail selon l'une des revendications 1 à 10,
**caractérisé en ce que** le moteur d'entraînement (10), sur sa circonférence extérieure, est complètement entouré par une paroi intérieure cylindrique (35) du stator (11).

12. Appareil de travail selon l'une des revendications 1 à 11,
**caractérisé en ce qu'**il est prévu, fixée au tube de soufflage (13), une buse de soufflage (4) à travers laquelle le souffleur (9) refoule l'écoulement d'air de travail.

13. Appareil de travail selon l'une des revendications 1 à 12,
**caractérisé en ce que** l'appareil de travail comporte un conduit pour câble (17) qui relie le compartiment pour moteur (26) à un espace intérieur de boîtier (29) disposé à l'extérieur du tube de soufflage (13), et à travers lequel dépasse au moins un câble de raccordement (32) du moteur d'entraînement (10).

14. Appareil de travail selon la revendication 13,
**caractérisé en ce que** la section transversale d'écoulement libre du conduit pour câble (17) représente moins d'environ 10% de la section transversale d'écoulement de l'ouverture de prélèvement (18).

15. Appareil de travail selon les revendications 13 ou 14,
**caractérisé en ce que** l'appareil de travail comporte une commande (16), disposée dans l'espace intérieur de boîtier (26) dudit appareil de travail, pour le moteur d'entraînement (10).

16. Appareil de travail selon la revendication 15,
**caractérisé en ce qu'**une première ouverture d'air de refroidissement (30) mène dans l'espace intérieur de boîtier (26), **en ce que** l'espace intérieur de boîtier (26) est relié par une deuxième ouverture d'air de refroidissement (31) à une zone située en amont du souffleur (9), et **en ce que** la commande (16) est disposée sur la trajectoire d'écoulement entre la première ouverture d'air de refroidissement (30) et la deuxième ouverture d'air de refroidissement (31).

17. Appareil de travail selon l'une des revendications 1 à 16,
**caractérisé en ce que** le moteur d'entraînement (10) est un moteur à rotor intérieur.

18. Appareil de travail selon l'une des revendications 1 à 17,
**caractérisé en ce que** l'appareil de travail comporte une poignée (3) qui sert à guider l'écoulement d'air de travail, en fonctionnement.

19. Appareil de travail selon l'une des revendications 1 à 18,
**caractérisé en ce que** l'appareil de travail est un appareil souffleur (1) ou un appareil aspirateur/souffleur (51, 67).
